# EUROPÄISCHE PATENTSCHRIFT

(11) **EP 2 025 729 B1**
(45) Veröffentlichungstag und Bekanntmachung des Hinweises auf die Patenterteilung: **12.10.2011**
(21) Anmeldenummer: 08159839.3
(22) Anmeldetag: 07.07.2008
(51) Int. Cl.: C09J 7/02

(54) **Weiterreißfestes Klebeband**
Tear proof adhesive tape
Bande adhésive protégé contre la déchirure

(30) Priorität: 25.07.2007 DE 102007035130
(43) Veröffentlichungstag der Anmeldung: 18.02.2009
(73) Patentinhaber: TESA SE, 20253 Hamburg (DE)
(72) Erfinder: Rodewald, Ilse, Charlotte, NC 28210 (US); Latz, Dr. Henning, 21337, Lüneburg (DE); Yun, Petra, 20251, Hamburg (DE)

(56) Entgegenhaltungen:
- EP-A- 1 813 659

## Beschreibung

Die Erfindung betrifft ein Klebeband mit einem Trägermaterial, auf das zumindest einseitig eine Klebemasse aufgebracht ist, wobei das Trägermaterial aus mindestens einer Folie besteht.

Bei der Anwendung von Klebebändern wird neben der Gewährleistung ausreichender Zugfestigkeit in Längsrichtung vielfach der Anspruch der genügenden Weiterreißfestigkeit in Querrichtung gestellt. Typischerweise ist diese Eigenschaft wichtig bei Anwendungen, bei denen aus bestimmten Gründen eine Seitenkantenverletzung des Bandes auftreten kann.

Bekannt ist, dass ungereckte, das heißt nichtorientierte Folien wie zum Beispiel aus Polyolefinen oder Polyamiden aufgrund ihrer Zähigkeit dem Weiterreißen einen gewissen Widerstand entgegensetzen. Dieser Folientypus eignet sich wegen der systembedingten hohen Dehnung allerdings weniger als Klebebandträger für Anwendungen mit hoher Längsbelastung.

Hingegen weisen Folien, die zum Erreichen einer hohen Zugfestigkeit entweder mono- oder biaxial verstreckt worden sind, üblicherweise den Nachteil einer drastisch verringerten bis extrem niedrigen Weiterreißfestigkeit auf.

Es existieren mehrere Ansätze, um Klebbänder mit hoher Weiterreißfestigkeit zu erhalten. Eine besonders häufig genutzte Lösung ist die Faserverstärkung des Trägermaterials. Üblich sind so genannte "Filament"-Klebebänder mit unidirektionalen Längs-Gelegen oder bidirektionalen Geweben oder Gelegen, die aus gezwirnten oder getengelten Garnen bestehen. Diese Garne können zum Beispiel aus künstlichen Endlosfasern, aber auch aus Naturfasern bestehen. Die Fasern dieser Art von Klebebändern sind oftmals zu örtlich fixierten Faser- oder Filamentbündeln zusammengehalten.
Die so eingebrachten Fasern können zusätzlich zur Aufgabe der Erhöhung der Weiterreißfestigkeit einen variablen Anteil der Zugfestigkeit übernehmen.

Weiterhin kann durch einen Mehrschichtaufbau der Trägerfolie, welcher in der Regel durch Aufeinanderlaminieren verschiedener Folienarten erzeugt werden kann, die Weiterreißfestigkeit erhöht werden. Nachteilig sind hier aber der mit zunehmender Schichtzahl steigende Kostenaufwand und das im Vergleich zur Faserverstärkung erreichbare begrenzt bleibende Niveau der Weiterreißfestigkeit.

Eine andere Lösung stellt zum Beispiel eine gereckte Folie aus mindestens zwei coextrudierten Schichten unterschiedlicher Zusammensetzung mit einer unregelmäßigen inneren Struktur dar, wie sie in DE 199 55 610 A1 dargelegt ist. Die Dicke einer dieser Schichten variiert hier umgekehrt proportional zu der zweiten Schicht über die Breite des Klebebandes, die Gesamtdicke ist konstant. Ein in Querrichtung beginnender Riss wird durch die unterschiedlichen mechanischen Eigenschaften der Schichten in Längsrichtung umgelenkt. Ein augenfälliger Nachteil der hier offenbarten Ausführungsform ist jedoch die aufwändige maschinentechnische Ausstattung, die zur Herstellung dieses Folientyps erforderlich ist.

Eine weitere Möglichkeit, die Weiterreißfestigkeit zu erhöhen, ist zum Beispiel eine verstärkende Rippenstruktur, wie sie in EP 0 411 820 A1, EP 0 343 896 A1, US 5,145,544 A und US 5,173,141 A offenbart ist. Auch diese Variante weist verschiedene Nachteile auf, die bereits hinlänglich in der DE 199 55 610 A1 dargelegt sind.

Die EP 1 775 331 A1 lehrt eine Methode, mit der Weiterreißfestigkeit durch paralleles Laminieren von mehreren einzelnen Folienstreifen auf einen Basisträger erzeugt wird. Hierbei wird das Prinzip genutzt, dass das Weiterreißen des Laminats beginnend an der verletzten Kante an der unverletzten Seitenkante des nächsten Einzelstreifens gestoppt wird. Auch diese Lösung ist nachteilig, insofern sie zum einen hohe Anforderungen an den Produktionsprozess stellt und zum anderen aufgrund des Mehrlagenaufbaus zumindest zwei getrennte vorangehende Produktionsschritte benötigt.

Aufgabe der Erfindung ist es, ein möglichst einfach aufgebautes und damit kostengünstig herstellbares Klebeband zur Verfügung zu stellen, das eine in Querrichtung (cross direction, cd) sehr hohe Weiterreißfestigkeit bei gleichzeitig hoher Zugfestigkeit in Längsrichtung (machine direction, md) aufweist.

Gelöst wird diese Aufgabe durch ein Klebeband, wie es in Anspruch 1 dargelegt ist. Gegenstand der Unteransprüche sind dabei Weiterbildungen des erfindungsgemäßen Klebebands sowie Verwendungen desselben.

Demgemäß betrifft die Erfindung ein Klebeband mit einem Trägermaterial, auf das zumindest einseitig eine Klebemasse, insbesondere Haftklebemasse aufgebracht ist, wobei das Trägermaterial aus mindestens einer Folie besteht, die mindestens einen sich in der Längsrichtung des Klebebands erstreckenden Ritz aufweist, so dass mindestens eine weitere Kante innerhalb der Folie zusätzlich zu den beiden Seitenkanten erzeugt wird.

Es verbleibt zum Erhalt einer ausreichenden Festigkeit in Querrichtung - den Folienquerschnitt betrachtet - unter dem Ritz eine Schicht von zumindest 8 % der gesamten Foliendicke, das heißt, der Ritz erstreckt sich zwischen mindestens 50 % und maximal 92 % der Foliendicke.

Weiter vorzugsweise beginnt der Ritz auf der Oberfläche des Trägermaterials, auf die die Klebemasse aufgetragen ist, so dass die freiliegende Oberfläche des Trägermaterials unbeschädigt ist.

Der Ritz (beziehungsweise, falls mehrere vorhanden sind, die Ritze) können als durchgängige oder als unterbrochene Linie, letztere bevorzugt in regelmäßigen Abständen unterbrochen, ausgeführt sein.

Als Material für die Folie können alle dem Fachmann bekannten Folienmaterialien verwendet werden. Die Folie wird nach mechanischen Eigenschaften wie Zugfestigkeit, Steifigkeit und weiteren ausgewählt.

Beispiele für verwendbare Folienmaterialien sind PP, PE, PET, PA, PU, PVC oder Polyester. Allgemein können Polyolefine, Copolymere aus Ethylen und polaren Monomeren wie Styrol, Vinylacetat, Methylmethacrylat, Butylacrylat oder Acrylsäure, Homopolymere wie HDPE, LDPE, MDPE oder Copolymere aus Ethylen und einem weiteren Olefin wie Propen, Buten, Hexen oder Octen (zum Beispiel LLDPE, VLLDE) oder Polypropylene wie zum Beispiel Polypropylen-Homopolymere, Polypropylen-Random-Copolymere oder Polypropylen-Block-Copolymere) sowie Mischungen aller zuvor genannten Polymere eingesetzt werden.

Bevorzugt einsetzen lassen sich steifere und zugfeste Träger aus Polypropylen, Polyester und H-PVC. Besonders eignen sich dabei diese Träger in zumindest monoaxial orientierter Form.
Beispielsweise seien bei PP-Trägern geeignete Reckverhältnisse von 1:4 bis 1:10, bevorzugt 1:6 bis 1:8,5. Bei anderen Polymeren sind die Reckverhältnisse entsprechend zu wählen und dem Fachmann bekannt.
Auch wenn gerade einer der Vorteile des erfindungsgemäßen Klebebandträgers darin liegt, dass Weiterreißfestigkeit bereits mit einem einschichtigen Material erzeugt werden kann, wird hier ausdrücklich daraufhin gewiesen, dass sich für den erfindungsgemäßen Gegenstand auch Folien eignen, die in verschiedenen Schichten Kombinationen der voran genannten Materialien aufweisen, das heißt beispielsweise durch Coextrusion oder mittels Laminaten hergestellt sind.

Die Foliendicken können vorteilhaft von 15 bis 130 µm reichen. Auch stärkere Dicken können zum Einsatz kommen.
Die Folie kann des Weiteren als Schutz gegen Chemikalien oder als Barrierefolie dienen, indem zum Beispiel eine metallische Schicht aufgebracht wird. Sie kann durch Einarbeitung von UV-Absorbern den UV-Schutz der Klebmasse gewährleisten. Sie kann die optischen Eigenschaften wie Glanz oder Farbe bestimmen, indem beispielsweise eine gefärbte Folie eingesetzt wird.

Wird das erfindungsgemäße Klebeband, das über mindestens einen Ritz verfügt, an einer der beiden Seitenkanten verletzt, so setzt sich der resultierende Riss nur solange quer zur Maschinenrichtung fort, bis er auf diesen Ritz trifft. Dort wird der Riss in Längsrichtung zum Klebeband abgelenkt. Der Träger wird durch das Reißen also gerade an der Ritzlinie in Längsrichtung fraktioniert, wobei das Ende einer Fraktion durch einen Ritz als Rissstopp oder eine Seitenkante des Klebebands markiert wird.
Die in Längsrichtung verlaufenden Bereiche des unverletzten Trägers, die durch einen Ritz und eine Seitenkante oder durch zwei nebeneinander liegende Ritze seitlich begrenzt sind, werden im Folgenden Streifen genannt.

In einer bevorzugten Ausführungsform des Trägermaterials werden in den Träger zwei Randstreifen geritzt. Die Breite der Randstreifen beträgt hier maximal ein Drittel der gesamten Klebebandbreite. Die Randstreifen bieten Schutz vor im Vorfeld kalkulierbarer Seitenkantenverletzung mit einer maximalen Eindringtiefe.

Die Streifen können unterschiedliche Breiten aufweisen. Insbesondere bevorzugt ist es aber, wenn alle Streifen die gleiche Breite aufweisen. Dabei kann sich herstellungsbedingt eine abweichende Breite der beiden außenliegenden Streifen ergeben.

Um durch die Streifen zusätzliche innere Kanten zu schaffen, sind zumindest zwei vorgesehen. Die Ritzkante kann dann mittig angeordnet sein, so dass die beiden Streifen gleich breit sind. Es können aber auch "unsymmetrische" Folien hergestellt werden, bei denen der eine Streifen breiter ist als der zweite Streifen und somit die maximale Einreißstrecke von der Seite des schmaleren Streifens her reduziert ist.

Die Zahl der Streifen lässt sich im Prinzip beliebig erhöhen, wobei durch die Breite des Klebebandes und die Streifenbreite die Obergrenze der Streifenzahl bedingt wird. So lassen sich beispielsweise auch symmetrische oder unsymmetrische Schlitzfolien mit drei Streifen herstellen, beispielsweise solche, bei denen in der Nähe der Klebebandkanten jeweils eine innere Kante als Rissgrenze vorgesehen ist.

Die Breite der Streifen liegt besonders bevorzugt zwischen 1 und 4 mm, sehr bevorzugt bei etwa 2 mm. Insbesondere bei Streifen, die eine geringe Breite (wie 1 bis 4 mm) im Verhältnis zur Breite des Klebebandes, beispielsweise 19 mm, aufweisen, ist eine gleiche Streifenbreite von Vorteil.

Bevorzugt werden Ausführungsformen, bei denen ein Ritz im Träger des Klebebands vorhanden ist. Weiterhin haben sich zwei Ritze als vorteilhaft erwiesen, die vorzugsweise symmetrisch angeordnet sind, und zwar so dass von diesen jeweils einer nahe an einer der beiden Seitenkanten des Trägermaterials angeordnet ist. So ist ein Klebeband bei einer Breite von 15 mm, in dem eine Folie mit insgesamt drei Streifen vorhanden ist, die von links nach rechts eine Breite von 4 / 7 / 4 mm haben, besonders vorteilhaft. Bei einer Breite von 19 mm ist vorzugsweise eine Anordnung 4 / 11 / 4 oder auch 4,5 / 5 / 5 / 4,5 zu wählen.

Bei der Wahl der Tiefe der Ritze ist zu beachten, dass - je nach verwendeten Folienmaterial inklusive der dem Fachmann bekannten Additive und Füllmittel als auch dem Orientierungsgrad der Folie - die für eine sichere Rissumlenkung ausreichende Mindesttiefe erreicht wird. Gleichzeitig wird man eine Tiefe wählen, die nicht wesentlich höher als die für die Rissumlenkungsfunktion gerade notwendige Tiefe, da mit Erhöhung der Ritztiefe die Verringerung der Festigkeit des Trägermaterials in Querrichtung einhergeht. Eine ausreichende Festigkeit des Trägers in Querrichtung spielt zum Beispiel eine Rolle, wenn das Klebeband während der Applikation über konvexe Rollen geführt wird, wobei der Träger durch die Bandspannung in Querrichtung belastet wird. In einer bevorzugten Ausführungsform wird ein Klebebandträger aus monoaxial orientiertem PP verwendet, und/oder beträgt die Ritztiefe zwischen 50 und 92 % der Gesamtdicke des Trägers. Besonders bevorzugt ist eine Tiefe zwischen 60 und 75% der Trägerdicke.

Auf diese Weise lassen sich Klebebänder erzeugen, die in ihrer Dicke deutlich unter Klebebändern des Standes der Technik für entsprechende Einsatzgebiete liegen. So lassen sich Klebebänder mit einer Dicke von insbesondere 50 bis 150 µm erzeugen, besonders bevorzugt von unter 130 µm erzeugen. Die Festigkeit des Trägermaterials beträgt vorzugsweise mindestens 250 N/cm, insbesondere 300 N/cm (bezogen auf den Bereich von 50 bis 150 µm Trägerdicke. Durch die sichere Rissumlenkung an den jeweiligen Ritzungen wird eine Weiterreißfestigkeit gleich oder nahe derjenigen einer unverletzten Folienkante erreicht.

Der geritzte Träger kann mit einer Release-Schicht ausgerüstet werden, durch die die Oberflächeneigenschaften wie Friktion oder Releasewirkung bei einseitig klebmassebeschichteten Klebebändern entscheidend beeinflusst werden können.

Die Klebemasse der erfindungsgemäßen Klebebänder kann eine (Selbst-)Klebemasse sein, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen.

Daneben hat sich ein 100%-System auf Basis von Styrol-Isopren-Styrol (SIS) als geeignet erwiesen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Geeignet ist eine Klebemasse auf Acrylathotmelt-Basis, auf Lösemittelbasis oder auf wässriger Basis, wobei erstere einen K-Wert von mindestens 20 aufweisen kann, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird.
Die Klebemasse auf Acrylathotmelt-Basis kann aber auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal®, insbesondere Acronal® DS3458, von der BASF geführt wird. Diese Klebemasse mit niedrigem K-Wert erhält ihre anwendungsgerechten Eigenschaften durch eine abschließende strahlenchemisch ausgelöste Vernetzung.

Abschließend sei erwähnt, dass auch auf Polyurethan basierende Kleber geeignet sind.

Besonders vorteilhaft lässt sich ein einseitig klebend ausgerüstetes Klebeband verwenden, wobei der Auftrag an Klebemasse vorzugsweise zwischen 15 bis 60 g/m², weiter vorzugsweise zwischen 20 bis 40 g/m² liegt.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien. Bevorzugt wird aber ein nicht-fusselndes Material eingesetzt wie eine Kunststofffolie oder ein gut verleimtes, langfaseriges Papier.

Das Ritzen der Folie kann an verschiedenen Punkten des Herstellungsprozesses erfolgen. Der Träger kann vor oder nach der Klebmassebeschichtung angeritzt werden. Hierzu können alle handelsüblichen Schneid-, Schlitz- oder Stanzverfahren benutzt werden, die die benötigte Präzision für das Anritzen mitbringen und für die Anwendung in derart geringem Abstand geeignet sind.
Bevorzugt eignet sich hierzu das Verfahren des rotativen Stanzens nach der Klebmassebeschichtung. In diesem Fall wird ein Klebeband mit den oben genannten Eigenschaften hergestellt und durch rotatives Stanzen sowohl angeritzt als auch gleichzeitig konfektioniert. Das Klebeband wird, mit der Klebmasseseite nach oben, in entsprechender Arbeitsbreite der Stanzwelle unter eben dieser vorbeigeführt. Dabei werden verschieden tiefe Schlitze in die Matrix längs der Maschinenrichtung eingebracht. Im Fall von orientierten Folien geschieht dies parallel zur Hauptorientierungsrichtung der Folie. Einige der Schlitze teilen das Material, anderen dagegen ritzen es nur an. Auf diese Weise wird das entsprechende Klebeband auf die gewünschte Breite heruntergeschnitten, und gleichzeitig wird, durch die Klebmasse hindurch, das Trägermaterial angeritzt. Das rotative Stanzen ist dabei derart präzise, dass das Trägermaterial genau definiert eingeritzt wird. Dieses Verfahren erlaubt die genaue Positionierung der Ritzungen zu den Seitenkanten des Tapes, unter Beachtung von in der Anwendung eingeplanten Seitenkantenbeschädigungen des Klebebandes.
Eine weitere Möglichkeit stellt das rotative Stanzen vor der Klebmassebeschichtung dar. In diesem Fall wird das Trägermaterial an einer oder einer Kombination mehrerer Stanzwellen vorbeigeführt. Auf diese Weise wird der Rohträger in gleichmäßigen Abständen angeritzt. Im Weiteren kann dieser Träger wie jeder andere Folienträger weiterverarbeitet werden und konfektioniert werden.

Die klassischen Anwendungen von weiterreißfesten Klebebändern umfassen zum Beispiel Bündeln, Verpacken, Palettisieren oder Einsatz ähnlich eines Spanngurtes und sind in der US 2,750,315 A eingehend beschrieben. Deren Gemeinsamkeit ist die Fixierung eines oder mehrerer Gegenstände an sich selbst, aneinander oder an weiteren Objekten.
Sämtliche dort erwähnte Anwendungen können mit der vorliegenden Erfindung ähnlich effizient erfüllt werden.
Neben den oben genannten Anwendungen ist das erfindungsgemäße Klebeband hervorragend geeignet für alle Aufgaben, bei denen eine verstärkende Wirkung lasttragender Elemente in Kombination oder wahlweise einzeln mit Ein- und Weiterreißfestigkeit benötigt wird.
Verstärkt werden können zum Beispiel Materialien wie Papier, Well- oder Vollpappe vorzugsweise an exponierten Stellen wie Eingriffen, Henkeln und Auslässen. Außerdem kann das Klebeband als konstruktives Element verwendet werden, um zum Beispiel das Ausbeulen schwererer Verpackungen zu verhindern.

Hieraus ergeben sich Vorteile wie
- das Aufwerten von Verpackungen für höhere Beanspruchungen,
- die Reduktion des Gesamtmaterialeinsatzes durch gezielte Verstärkung der Hauptbelastungszonen und
- die Erhöhung der Verwendungsdauer einer Verpackung

Im Gegensatz zu den bekannten Lösungen erfordert die vorliegende Erfindung keine verstärkenden Filamente.

Die hier vorliegende Erfindung basiert auf der unerwarteten Beobachtung, dass ein seitlicher Einriss in einem Folienträgermaterial nicht nur durch einen durchgeschlitzten, sondern auch schon durch einen nur in der ausreichenden Tiefe angeritzten Teilschlitz in Längsrichtung aufgehalten und umgelenkt wird, so dass der verbleibende Teil des Trägermaterials, den Zug aufnehmen und in plastische Verformung umsetzen kann. Der oder die verbleibenden Streifen werden gedehnt. Gerade steife, dünne Folien wie MOPP oder PET reagieren unter Zugspannung sofort mit Durchreißen, sobald die Seitenkante verletzt wird. Dabei können schon ein unsauberer Schnitt oder einfach nur ein Kratzer eine solche Verletzung darstellen, die zu einem totalen Versagen des Klebebands unter Zugbelastung führt.

Durch das Anritzen des Trägermaterialen können aber nun auf Grund der oben genannten Beobachtung in frei wählbaren Abständen Rissstops eingefügt werden, die bei Seitenkantenverletzung ein vollständiges Durchreißen und damit Versagen verhindern.
In dem Trägermaterial sind vorzugsweise mehrere Anritzungen parallel nebeneinander angeordnet. Bei Verletzung im Randbereich stoppt der Riss unmittelbar an der Ritzung, also in unmittelbarer Nähe des ursprünglichen Endes des Risses (die Verletzungstiefe entspricht der endgültigen Einreißtiefe).
Die Erfindung zeigt, dass ein Klebeband mit einer definiert längsgeritzten Folie die Vorteile der erhöhten Weiterreißfestigkeit in Querrichtung bietet und gleichzeitig die Vorteile der Folienklebebänder aufweist, nämlich flache und ebene Struktur und geringe Dichte bei hoher Zugfestigkeit. Dies führt im Gegensatz zu zum Beispiel Filament verstärkten Klebebändern zu sehr flachen Aufbauten von 120 µm und weniger bei ähnlicher Leistung. Des Weiteren entstehen keinerlei Hohlräume wie bei Geweben und Gelegen, die durch Klebmasse aufgefüllt werden müssen. Dies ergibt eine erhebliche Klebmasseersparnis.

Weitere Vorteile dieser Erfindung liegen unter anderem darin, dass Folien verwendet werden. Dies führt im Gegensatz zu zum Beispiel Filament verstärkten Klebebändern zu sehr flachen Aufbauten von 100 µm und weniger bei ähnlicher Leistung. Des Weiteren entstehen keinerlei Hohlräume wie bei Geweben und Gelegen, die durch Klebmasse aufgefüllt werden müssen. Dies führt zu einer erheblichen Klebmasseersparnis.

Anhand der nachfolgend beschriebenen Figuren wird die Erfindung näher erläutert, ohne damit diese unnötig einschränken zu wollen.

Es zeigen
- Figur 1a: das Klebeband mit Blick auf die Folie, wobei die Ritze durchgängig ausgeführt sind,
- Figur 1b: das Klebeband mit Blick auf die Folie, wobei die Ritze regelmäßige Unterberechungen aufweisen,
- Figur 2: das Klebeband nach Figur 1a im Schnitt quer zur Längsrichtung des Klebebands,
- Figur 3: das Ritzverfahren zur Herstellung des Klebebands,
- Figur 4: die erforderlichen Anlagenteile zur Durchführung des Ritzverfahrens und
- Figur 5: die Mikroskopaufnahme des Querschnitts einer Einritzung.

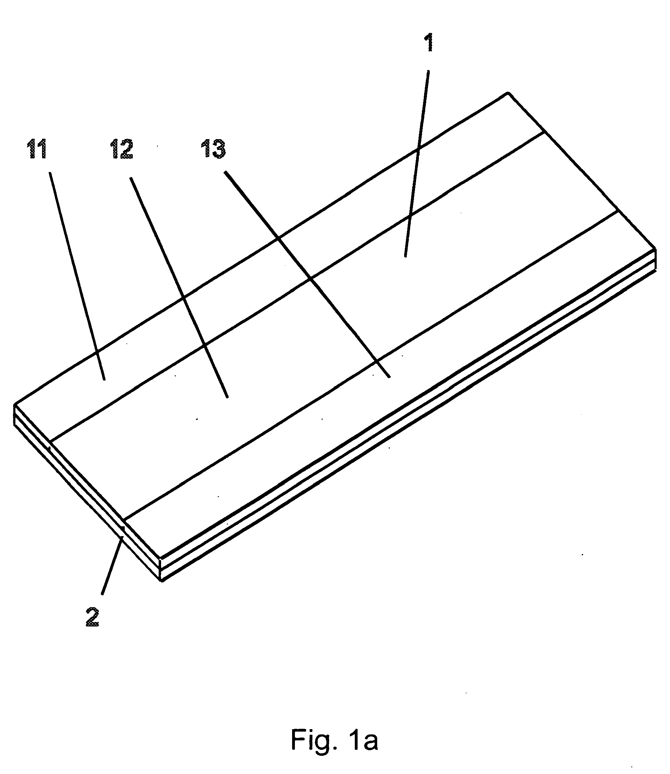

Gemäß Figur 1a weist das Klebeband als Trägermaterial eine Folie 1 auf, in die zwei Randstreifen 11, 13 sowie einen daraus resultierenden Mittelstreifen 12 geritzt sind. Die Breite der Randstreifen 11, 13 beträgt ein Drittel der gesamten Klebebandbreite.
Auf die Folie 1 ist eine Klebemasse 2 aufgetragen. Die Ritze sind dabei als durchgängige Linie ausgeführt.

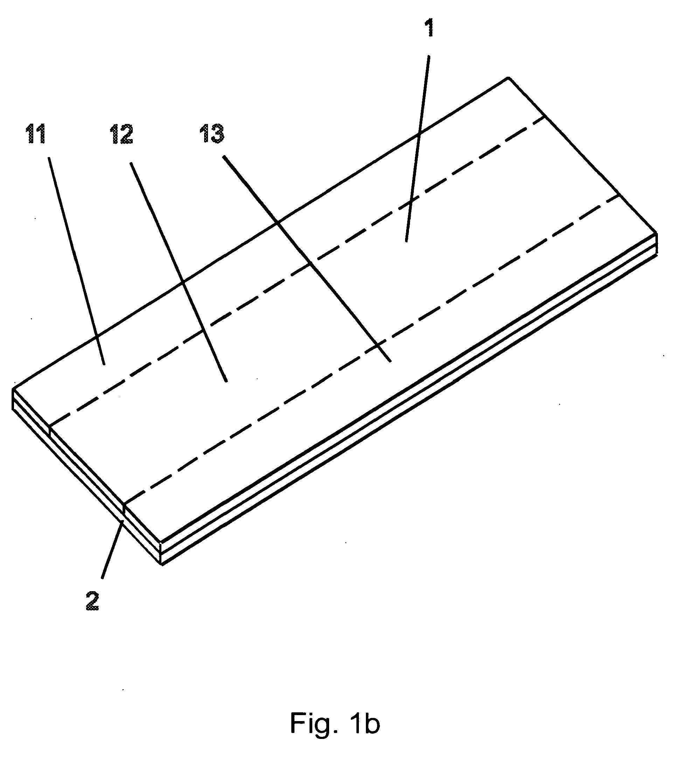

In Figur 1b ist ein Klebeband gezeigt, das mit dem aus der Figur 1a identisch ist mit der Ausnahme, dass die Ritze nicht als durchgängige Linien ausgeführt sind, sondern regelmäßige Unterberechungen aufweisen.

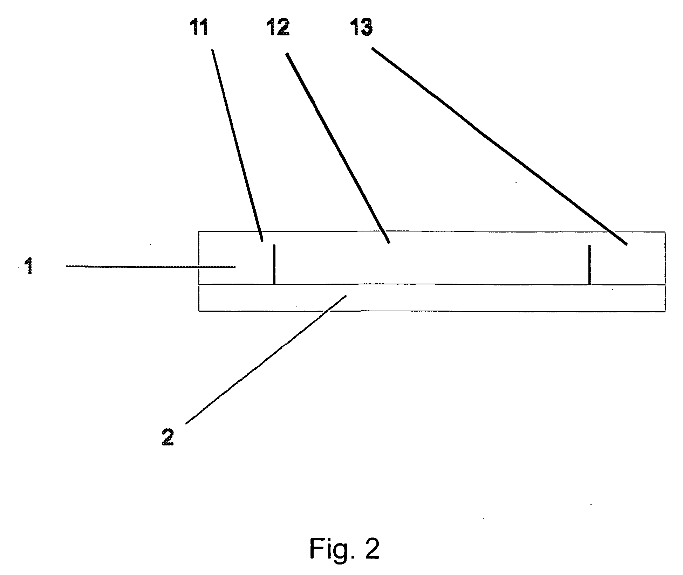

Figur 2 zeigt das Klebeband nach Figur 1 im Schnitt quer zur Längsrichtung des Klebebands. Die die Streifen 11, 12, 13 bildenden Ritze erstrecken sich nicht über die gesamte Dicke der Folie 1, sondern nur über 80 %. Die Ritze beginnen auf der Oberfläche der Folie 1, auf die die Klebemasse 2 aufgetragen ist, so dass die freiliegende Oberfläche des Trägermaterials unbeschädigt ist.

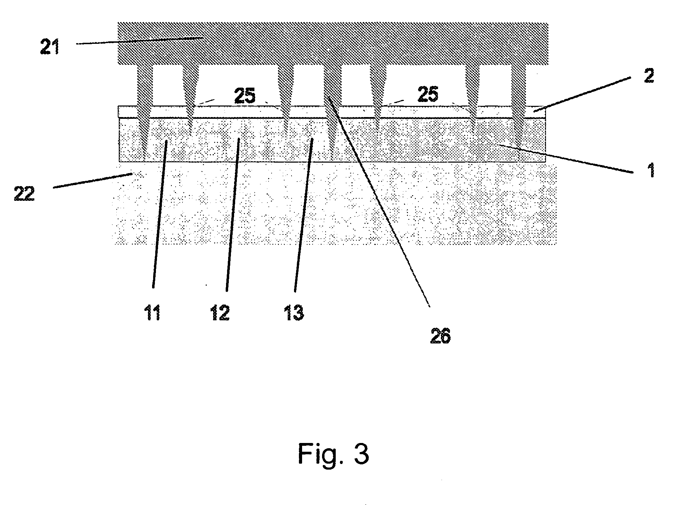

In der Figur 3 ist das Ritzverfahren zur Herstellung des Klebebands gezeigt. Das Klebeband besteht aus den zwei Schichten Folie 1 und Klebemasse 2 und wird zwischen einen Rotationsstanzwelle 21 und einen Gegentanzzylinder 22 geführt.

Durch umlaufende Schneidlinien 23 (siehe Figur 3) wird zum einen gewährleistet, dass die Folie 1 geritzt wird, indem die Folie 1 lediglich angestanzt wird (25), gleichzeitig das Klebeband auf Breite geschnitten, indem die Folie 1 und die Klebemasse 2 durchgestanzt werden (26).

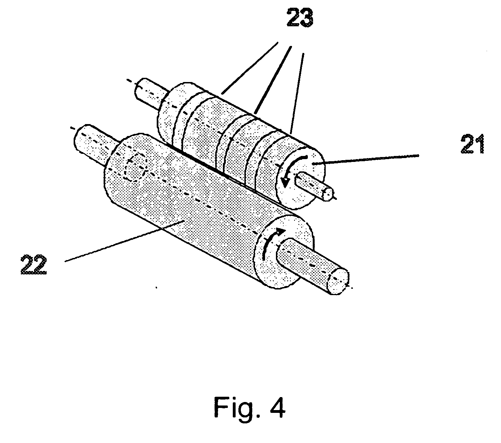

Figur 4 zeigt nochmals das Zusammenspiel von Rotationsstanzwelle 21 und Gegenstanzzylinder 22.

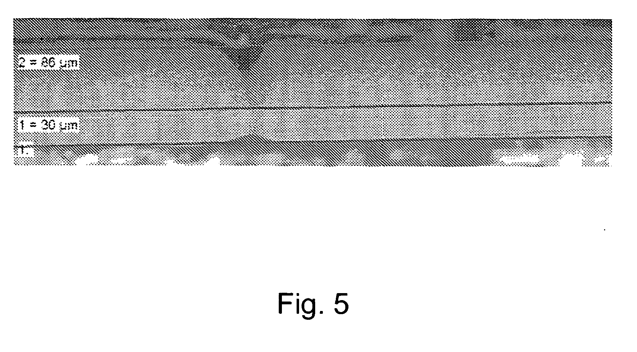

In Figur 5 wird eine Querschnittsaufname einer Einritzung einer ca. 86 µm starken PP-Folie bei einer Vergrößerung von 1:200 gezeigt. Gut zu erkennen sind die Verformung an der Einstichstelle des Stanzwerkzeugs und die im unteren Bereich des Ritzes eng aneinander liegenden Seitenkanten des eigentlichen Ritzes. Der verbleibende Steg unterhalb der Einritzung hat eine Dicke von ca. 30 µm. Ebenfalls ersichtlich ist die leichte Verformung der der Einstichstelle gegenüberliegenden Seite der Folie, welche vermutlich durch den plastischen Anteil der Reaktion des Trägermaterials auf die Krafteinwirkung des Trägermaterials bedingt ist.

Zur Herstellung des Ritzes werden extrem scharfe Messer eingesetzt mit einem sehr kleinen Schneidwinkel, insbesondere mit einem Schneidwinkel von bis zu 10°.

## Patentansprüche

1. Klebeband mit einem Trägermaterial, auf das zumindest einseitig eine Klebemasse, insbesondere Haftklebemasse aufgebracht ist, wobei das Trägermaterial aus mindestens einer Folie besteht,
**dadurch gekennzeichnet, dass**
die Folie mindestens einen sich in der Längsrichtung des Klebebands erstreckenden Ritz aufweist, dessen Tiefe sich über 50 und 92 % der Gesamtdicke des Trägers erstreckt.

2. Klebeband nach Anspruch 1, **dadurch gekennzeichnet, dass**
sich die Ritztiefe über 60 und 75% der Gesamtdicke des Trägers erstreckt.

3. Klebeband nach einem der Ansprüche 1 oder 2, **dadurch gekennzeichnet, dass**
der Ritz als durchgängige oder als unterbrochene Linie, letztere bevorzugt in regelmäßigen Abständen unterbrochen, ausgeführt ist.

4. Klebeband nach zumindest einem der Ansprüche 1 bis 3, **dadurch gekennzeichnet, dass**
das Trägermaterial zwei Ritze aufweist, von denen jeweils einer nahe an einer der beiden Seitenkanten des Trägermaterials angeordnet ist.

5. Klebeband nach zumindest einem der vorherigen Ansprüche, **dadurch gekennzeichnet, dass**
der Ritz auf der Oberfläche des Trägermaterials beginnt, auf die die Klebemasse aufgetragen ist, so dass die freiliegende Oberfläche des Trägermaterials unbeschädigt ist.

6. Klebeband nach zumindest einem der vorherigen Ansprüche, **dadurch gekennzeichnet, dass**
die Folie aus PP, PE, PET, PA, PU, PVC oder Polyester besteht und/oder eine Dicke von 15 bis 130 µm aufweist.

7. Klebeband nach zumindest einem der vorherigen Ansprüche, **dadurch gekennzeichnet, dass**
die Folie aus steifen und zugfesten Träger wie Polypropylen, Polyester und H-PVC besteht und/oder monoaxial gereckt ist, bevorzugt monoaxial orientiertem PP.

8. Klebeband nach zumindest einem der vorherigen Ansprüche, **dadurch gekennzeichnet, dass**
der Auftrag an Klebemasse auf das Trägermaterial zwischen 15 bis 60 g/m², vorzugsweise zwischen 20 bis 40 g/m² beträgt.

9. Klebeband nach zumindest einem der vorherigen Ansprüche, **dadurch gekennzeichnet, dass**
die Festigkeit des Trägermaterials mindestens 250 N/cm, insbesondere 300 N/cm beträgt.

10. Verwendung eines Klebebands nach zumindest einem der vorherigen Ansprüche zum Bündeln, Verpacken, Palettisieren.

11. Verwendung eines Klebebands nach zumindest einem der vorherigen Ansprüche als Verstärkungsband auf Papier, Well- oder Vollpappe, vorzugsweise an exponierten Stellen wie Eingriffen, Henkeln und Auslässen,

## Claims

1. Adhesive tape having a backing material applied to at least one side of which is an adhesive, in particular a pressure-sensitive adhesive, the backing material being composed of at least one film, **characterized in that** the film has at least one score which extends in the machine direction of the adhesive tape and whose depth extends over 50 and 92% of the total thickness of the backing.

2. Adhesive tape according to Claim 1, **characterized in that** the score depth extends over 60 and 75% of the total thickness of the backing.

3. Adhesive tape according to Claim 1 or 2, **characterized in that** the score is made as a continuous or as a broken line, the latter broken preferably at regular intervals.

4. Adhesive tape according to at least one of Claims 1 to 3, **characterized in that** the backing material has two scores, of which one in each case is disposed close to one of the two side edges of the backing material.

5. Adhesive tape according to at least one of the preceding claims, **characterized in that** the score begins on the surface of the backing material to which the adhesive has been applied, so that the exposed surface of the backing material is undamaged.

6. Adhesive tape according to at least one of the preceding claims, **characterized in that** the film is composed of PP, PE, PET, PA, PU, PVC or polyester and/or has a thickness of 15 to 130 µm.

7. Adhesive tape according to at least one of the preceding claims, **characterized in that** the film is composed of stiff and high-tensile backings such as polypropylene, polyesters and U-PVC and/or is stretched monoaxially, preferably monoaxially oriented PP.

8. Adhesive tape according to at least one of the preceding claims, **characterized in that** the application of adhesive to the backing material amounts to between 15 to 60 g/m², preferably between 20 to 40 g/m².

9. Adhesive tape according to at least one of the preceding claims, **characterized in that** the strength of the backing material is at least 250 N/cm, in particular 300 N/cm.

10. Use of an adhesive tape according to at least one of the preceding claims for bundling, packing or palletizing.

11. Use of an adhesive tape according to at least one of the preceding claims as reinforcing tape on paper, corrugated board or solid board, preferably at exposed positions such as grips, handles and cutouts.

## Revendications

1. Bande adhésive présentant un matériau support, sur lequel est appliquée, du moins d'un côté, une masse adhésive, en particulier une masse autoadhésive, le matériau support étant constitué par au moins une feuille, **caractérisée en ce que** la feuille présente au moins une rayure s'étendant dans la direction longitudinale de la bande adhésive, dont la profondeur s'étend sur 50 et 92% de l'épaisseur totale du support.

2. Bande adhésive selon la revendication 1, **caractérisée en ce que** la profondeur de la rayure s'étend sur 60 et 75% de l'épaisseur totale du support.

3. Bande adhésive selon l'une quelconque des revendications 1 ou 2, **caractérisée en ce que** la rayure est réalisée sous forme de ligne continue ou interrompue, cette dernière étant de préférence interrompue à des distances régulières.

4. Bande adhésive selon au moins l'une quelconque des revendications 1 à 3, **caractérisée en ce que** le matériau support présente deux rayures, dont à chaque fois une est agencée à proximité d'un des deux bords latéraux du matériau support.

5. Bande adhésive selon au moins l'une quelconque des revendications précédentes, **caractérisée en ce que** la rayure démarre sur la surface du matériau support sur laquelle la masse adhésive est appliquée, de manière telle que la surface exposée du matériau support n'est pas abîmée.

6. Bande adhésive selon au moins l'une quelconque des revendications précédentes, **caractérisée en ce que** la feuille est en PP, en PE, en PET, en PA, en PU, en PVC ou en polyester et/ou présente une épaisseur de 15 à 130 µm.

7. Bande adhésive selon au moins l'une quelconque des revendications précédentes, **caractérisée en ce que** la feuille est constituée par un support rigide et résistant à la traction, tel que le polypropylène, le polyester et le H-PVC et/ou est étirée monoaxialement, de préférence en PP étiré monoaxialement.

8. Bande adhésive selon au moins l'une quelconque des revendications précédentes, **caractérisée en ce que** l'application de la masse adhésive sur le matériau support est comprise entre 15 et 60 g/m², de préférence entre 20 et 40 g/m².

9. Bande adhésive selon au moins l'une quelconque des revendications précédentes, **caractérisée en ce que** la résistance du matériau support est d'au moins 250 N/cm, en particulier 300 N/cm.

10. Utilisation d'une bande adhésive selon au moins l'une quelconque des revendications précédentes pour l'empaquetage, l'emballage, la palettisation.

11. Utilisation d'une bande adhésive selon au moins l'une quelconque des revendications précédentes, comme bande de renfort sur du papier, du carton ondulé ou du carton plein, de préférence en des endroits exposés, tels que les poignées, les anses et les sorties.
